# EUROPÄISCHE PATENTSCHRIFT

(11) **EP 1 132 444 B1**
(45) Veröffentlichungstag und Bekanntmachung des Hinweises auf die Patenterteilung: **29.12.2004**
(21) Anmeldenummer: 01105711.4
(22) Anmeldetag: 07.03.2001
(51) Int. Cl.: C09J 7/02, C09J 133/08

(54) **Wiederabziehbare Schutzfolie**
Re-peelable protective sheet
Film de protection répelable

(30) Priorität: 07.03.2000 DE 10010983
(43) Veröffentlichungstag der Anmeldung: 12.09.2001
(73) Patentinhaber: BASF AKTIENGESELLSCHAFT, 67056 Ludwigshafen (DE)
(72) Erfinder: Staller, Christelle, Dr., 67470 Seltz (FR); Schumacher, Karl-Heinz, Dr., 67433 Neustadt (DE); Hartz, Oliver, 68309 Mannheim (DE); Röckel, Harald, Dr., 67435 Neustadt (DE)

(56) Entgegenhaltungen:
- EP-A- 0 417 564
- US-A- 5 055 504
- US-A- 5 908 908

## Beschreibung

Die Erfindung betrifft die Verwendung eines Klebstoffs, der ein radikalisch polymerisierbares Copolymerisat enthält, welches besteht aus 0,1 bis 10 Gew.-%, bezogen auf das Copolymerisat, aus einer Verbindung A mit mindestens einer copolymerisierbaren, ethylenisch ungesättigten Gruppe und einer Gruppe der Formel I 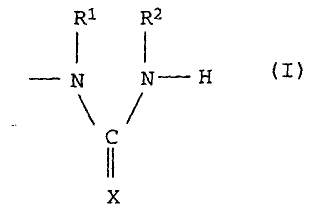 worin R¹ und R² unabhängig voneinander für ein Wasserstoff oder eine C₁-C₅ Alkylgruppe oder R¹ und R² zusammen für eine überbrückende C₂-C₄ Alkylengruppe, die bis zu zweifach mit einer C₁-C₄ Alkoxygruppe oder Hydroxylgruppe substituiert sein kann, stehen und X für O oder S steht, mindestens 80 Gew.-% sogenannter Hauptmonomere, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren, und neben diesen Hauptmonomeren gegebenenfalls weitere Monomeren ausgewählt aus Monomeren mit Carbonsäure-, Sulfonsäure oder Phosphonsäuregruppen, C₁-C₁₀ Hydroxyalkyl(meth)acrylate, (Meth)acrylamid, Phenyloxyethylglykolmono(meth)acrylat, Glycidylacrylat, Glycidylmethacrylat, Amino-(meth)acrylate und Monomere mit einer Benzophenongruppe, zur Herstellung von mit dem Klebstoff beschichteten, rückstandsfrei wiederabziehbaren Schutzfolien und Etiketten.

Die Verwendung von wäßrigen Polymerdispersionen als Klebstoff, bzw. Klebrohstoff für wiederabziehbare Schutzfolien oder Etiketten ist bekannt. Ein Nachteil der mit diesen Klebstoffen beschichteten Schutzfolien oder Etiketten ist, daß nach dem Abziehen oft Rückstände des Klebstoffs auf dem Substrat verbleiben. Zur Verbrennung der rückstandsfreien Wiederabziehbarkeit werden den wäßrigen Polymerdispersionen oft Vernetzer, z.B. Polyisocyanate, zugegeben. Das erfordert eine zusätzlichen Mischvorgang bei der Herstellung.

Haftklebstoffe auf Basis von Ethylenharnstoffgruppen enthaltenden Emulsionspolymerisaten sind in EP-A-822 206 beschrieben.

Aufgabe der vorliegenden Erfindung waren rückstandsfrei wiederabziehbare Schutzfolien und Etiketten. Die Schutzfolien und Etiketten sollten jedoch trotzdem eine gute Haftung zu den Substraten haben. Die Klebstoffschicht sollte weiterhin gut auf der Folie oder dem Etikett haften, sowie transparent, alterungs- und lichtbeständig sein.

Demgemäß wurden die eingangs definierte Verwendung gefunden.

Die Schutzfolien und Etiketten sind mit einem Klebstoff beschichtet.

Der Klebstoff enthält ein radikalisch polymerisiertes Copolymerisat, welches zu
0,1 bis 10 Gew.- %, vorzugsweise zu
0,5 bis 8 Gew.-%, besonders bevorzugt zu
1 bis 5 Gew.-%, bezogen auf das Copolymerisat,
aus einer Verbindung A mit mindestens einer Gruppe der oben angegebenen Formel I besteht.

Bevorzugt stehen R¹ und R² unabhängig voneinander für Wasserstoff, eine C₁-C₅ Alkylgruppe oder R¹ und R² zusammen für eine überbrükkende C₂-C₄ Alkylengruppe. X steht bevorzugt für 0.

Besonders bevorzugt stehen R¹ und R² zusammen für eine C₂ bis C₄-Alkylengruppe, insbesondere eine Ethylengruppe, welche die beiden N-Atome verbindet.

Bei der copolymerisierbaren, ethylenisch ungesättigten Gruppe in Verbindung A handelt es sich vorzugsweise um eine Acryl- oder Methacrylgruppe.

Die Verbindung A enthält vorzugsweise eine copolymerisierbare, ethylenisch ungesättigte Gruppe und eine Gruppe der Formel I.

Vorzugsweise handelt es sich bei der Verbindung A um Verbindungen der Formel 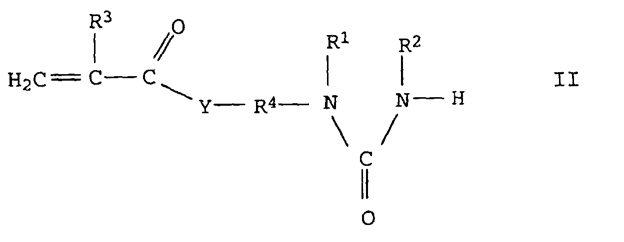 worin R³ für ein H-Atom oder eine Methylgruppe, Y für -O- oder -NH-, R⁴ für eine zweiwertige C₁-C₁₀-Alkylengruppe stehen und R¹, R² die oben genannte Bedeutung haben.

Vorzugsweise steht R³ für eine Methylgruppe, X für -O-, R⁴ für eine C₂-C₆-Alkylengruppe und R¹ und R² gemeinsam für eine C₂-C₄-Alkylengruppe.

Besonders bevorzugt Verbindungen A sind (1-(2-Methacrylogloxyethyl)imidazolin 2-on, bekannt als Ureidoethylenmethacrylat (R¹, R² = Ethylen; X = O; R³ = Methyl, kurz UMA) : 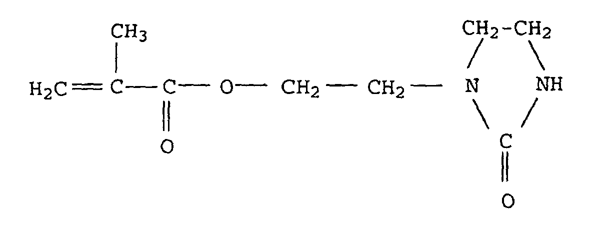 oder Ureidoethylenacrylat.

Das Copolymerisat ist aufgebaut aus radikalisch polymerisierbaren Verbindungen (Monomere).

Das Copolymerisat besteht zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Polymer weitere Monomere enthalten. Die weiteren Monomeren sind ausgewählt aus Monomeren mit Carbonsäure-, Sulfonsäure oder Phosphonsäuregruppen, C₁-C₁₀ Hydroxyalkyl(meth)acrylate, (Meth)acrylamid, Phenyloxyethylglykolmono(meth)acrylat, Glycidylacrylat, Glycidylmethacrylat, Amino-(meth)acrylate und Monomere mit einer Benzophenongruppe. Die Herstellung des Copolymerisats erfolgt in einer bevorzugten Ausführungsform durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsälze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 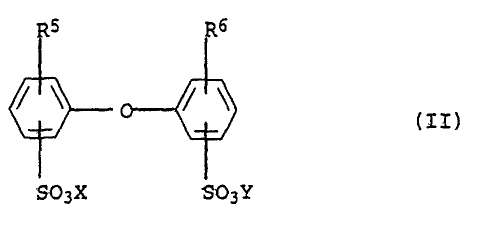 worin R⁵ und R⁶ Wasserstoff oder C₄- bis C₁₄-Alkyl bedeuten und nicht gleichzeitig Wasserstoff sind, und C und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sich insbesondere sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan. Der Anteil dieser Regler kann im Falle der Verwendung als Klebstoff für die Verbundfolienkaschierung insbesondere 0,05 bis 0,8 Gew.-Teile, bevorzugt 0,1 bis 0,5 Gew.-Teile bezogen auf 100 Gew.-Teile der zu polymerisierenden Monomeren betragen. Im Falle der Verwendung als Klebstoff für die Glanzfolienkaschierung ist die Mitverwendung eines Reglers weniger bevorzugt. Die Regler enthalten keine polymerisierbare, ethylenisch ungesättigte Gruppe. Die Regler bewirken einen Abbruch der Polymerisationskette und werden daher endständig an die Polymerketten gebunden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Der pH-Wert wird vorzugsweise auf pH-Werte kleiner 7,5, also sauer bzw. schwach sauer eingestellt.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Copolymerisat wird vorzugsweise in Form seiner wäßrigen Dispersion verwendet.

Eine andere bevorzugte Ausführungsform zur Herstellung des Copolymerisats ist die Lösungspolymerisation in einem organischen Lösungsmittel. Das Lösungsmittel wird anschließend vorzugsweise entfernt. Das weitgehend lösungsmittelfreie Copolymerisat kann dann vorzugsweise als Schmelzhaftklebstoff Verwendung finden.

Vorzugsweise handelt es sich bei Copolymerisaten, welche als Schmelzhaftklebstoff Verwendung finden, um mit UV-Licht vernetzbare Copolymerisate. Die Copolymerisate enthalten entsprechend bevorzugt mit UV-Licht vernetzbare Monomere (s. oben). Der Gehalt dieser Monomeren beträgt insbesondere 0,01 bis 10, vorzugsweise 0,05 bis 5 Gew.-%, bezogen auf das Copolymerisat.

Vorzugsweise werden die Copolymerisate durch Polymerisation der Monomeren, in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen oder Ketonperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymerisate können dann in lösungsmittelfreiem Zustand, d.h. als Schmelzen, eingesetzt werden. In manchen Fällen ist es auch von Vorteil, die UV-vernetzbaren Polymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Vorzugsweise werden die so erhaltenen Copolymerisate als Schmelze, d.h. im wesentlichen lösungsmittelfrei (Lösungsmittelgehalt vorzugsweise kleiner 2 Gew.-%, bezogen auf das Polymerisat), als Schmelzhaftklebstoff verwendet.

Die Glasübergangstemperatur des Copolymerisat liegt unabhängig vom Herstellungsverfahren bevorzugt unter 30°C, insbesondere beträgt sie -60 bis +20°C, besonders bevorzugt -50 bis 0°C und ganz besonders bevorzugt -50 bis -10°C.

Die Glasübergangstemperatur läßt sich nach üblichen Methoden wie Differentialthermoanalyse oder Differential Scanning Calorimetrie (s. z. B. ASTM 3418/82, sog. "midpoint temperature") bestimmen.

Das Copolymerisat hat unabhängig von der Art seiner Herstellung vorzugsweise eine Schälfestigkeit, als Maß für die Haftung von 0,5 bis 10, besonders bevorzugt von 1 bis 5 Newton/25 mm. Im Falle vernetzbarer Copolymerisate, z.B. mit UV-Licht vernetzbare Copolymerisate gilt der vorstehende Wert nach Vernetzung.

Der vorstehende Wert für die Schälfestigkeit wird in folgender Weise bestimmt.

Das Copolymerisat wird auf eine Polyethylenfolie aufgetragen. Die Auftragsmenge beträgt 20 g pro m² Folie.

Nach der Trocknung, soweit notwendig, und gegebenenfalls nach UV-Vernetzung wird eine 25 mm breiter Streifen der beschichteten Folie auf Edelstahl aufgeklebt. Der Anpreßdruck beträgt 2,5 kg (mit einer Rolle).

Anschließend wird die Kraft zum Abziehen des Streifens bei 21°C in einer Zugprüfmaschine nach ASTM1 bestimmt.

Das Copolymerisat wird als Bindemittel im Klebstoff verwendet.

Der Klebstoff kann allein aus dem Copolymerisat, bzw. der wäßrigen Dispersion des Copolymerisats bestehen.

Der Klebstoff kann noch weitere Zusatzstoffe, z.B. Netzmittel, Verdicker, Stabilisatoren, Sichtschutzmittel, Biozide enthalten.

Insbesondere handelt es sich um einen wäßrigen Klebstoff oder einen Schmelzhaftklebstoff.

Bei der erfindungsgemäßen Schutzfolie handelt es sich bevorzugt um eine mit dem Klebstoff einseitig beschichtete thermoplastische Folie. In Betracht kommen geeignete Polymerfolien, wie Folien aus Polyolefinen, z.B. Polyethylen, Polypropylen, Polyolefincopolymeren, Folien aus Polyestern oder Polyacetat.

Bei der Folie kann es sich auch um einen Folienverbund aus unterschiedlichen Polymerfolien handeln.

Gegebenenfalls kann auch auf die Oberfläche der Folie ein Haftvermittler aufgebracht werden, um die Haftung der Klebstoffschicht zu verbessern.

Bei den erfindungsgemäßen Etiketten kann es sich um Etiketten aus Papier oder vorzugsweise einer thermoplastischen Folie handeln. Als thermoplastische Folie kommen die oben aufgeführten Polymerfolien in Betracht. Die Etiketten sind einseitig mit Klebstoff beschichtet.

Der Klebstoff kann nach üblichen Methoden wie Rakeln, Streichen auf die Schutzfolien oder Etiketten aufgetragen werden.

Die Auftragsmenge beträgt bevorzugt 0,1 bis 20 g, besonders bevorzugt 2 bis 15 g Copolymerisat pro m².

Nach dem Auftragen folgt gegebenenfalls ein Trocknungsschritt zur Entfernung des Wassers. Im Falle der UV-vernetzbaren Copolymerisate erfolgt nach dem Auftragen die UV-Vernetzung.

Die Haftung der Klebstoffschicht auf den Schutzfolien oder Etiketten ist sehr gut.

Die Schutzfolie eignet sich als Schutz, insbesondere während des Transports und der Lagerung von Gegenständen.

Bei den zu schützenden Gegenständen kann es sich z. B. um solche aus Metall, Holz, Glas oder Kunststoff handeln.

Genannt seien z.B. Kraftfahrzeugkarosserien oder Karosserieteile, lackierte Oberflächen, transparente Oberflächen.

Die Etiketten eignen sich insbesondere z.B. für Verpackungsoberflächen, Bücher etc.

Die Schutzfolien und Etiketten können von den Gegenständen wieder abgezogen werden, ohne daß ein Klebstoffrückstand auf dem Gegenstand verbleibt. Die Haftung auf den Gegenständen ist gut, trotzdem lassen sich die Schutzfolien und Etiketten leicht abziehen.

### Beispiele

### I. Herstellung von Polymerdispersionen

### 1. Herstellung der Dispersion mit 2 % UMA

| | Vorlage (g) | Monomer-Emulsion (g) | Initiator | Nachkatalyse (g) |
|---|---|---|---|---|
| Wasser | 260 | 303 | | |
| Polymersaat (33 %ige in Wasser) | 3,25 | | | |
| Emulgatorlösung 1 | | 14,3 | | |
| Emulgatorlösung 2 | | 4,8 | | |
| 2-EHA | | 214,5 | | |
| nBA | | 436,1 | | |
| UMA | | 14,3 | | |
| MMA | | 42,9 | | |
| AS | | 7,15 | | |
| NaPS 2,5%ige Lösung in Wasser | | | 57,2 | |
| t-BHP 10 %ige Lösung in Wasser | | | | 21,4 |
| Rongalit C 18 %ige Lösung in Wasser | | | | 10,7 |

### Emulgatorlösung 1:

30 gew.-%ige Lösung des Natriumsalzes eines Schwefelsäurehalbestergemisches von C₁₀-C₁₆ alkyl-Ethoxylaten (mittlerer EO-Grad 30) in Wasser (Disponil FES 77 der Henkel KgaG)

### Emulgatorlösung 2:

45 gew.-%ige Lösung von (Dodecylsulfonylphenoxy)benzolsulfonsäurenatriumsalz (Dowfax 2A1 der Dow Chemicals)
MMA: Methylmethacrylat
2-EHA: 2-Ethylhexylacrylat
nBA: n-Butylacrylat
AS: Acrylsäure
UMA: Ureidomethacrylat 25 %ige Lösung in der angegebene MMA-Menge
NaPS: Natriumperoxodisulfat
t-BHP: tert-Butylhydroperoxid

### Fahrweise:

Die Vorlage wurde in einen 2-Liter-Kolben mit Rückflußkühler, Stickstoffeinleitung und Metallrührer gefüllt. Unter Stickstoffspülung wurde auf 90°C gebracht. 20 % der Initiatorlösung wurden in 2 Minuten zugegeben. Nach 5 Minuten wurde die Monomer-Emulsion innerhalb von 3 Stunden zugegeben. Gleichzeitig wurde die restliche Initiator-Lösung innerhalb von 3,5 Stunden zugegeben. Nach dem Ende des Initiator-Zulaufes wurde für 30 Minuten nachpolymerisiert. Dann wurde auf 80°C gekühlt und die Nachkatalysator-Lösung und der Ammoniak zugegeben.

### 2. Dispersion ohne UMA (zum Vergleich)

Die Durchführung entspricht Beispiel 1; UMA wurde jedoch durch MMA ersetzt.

### 3. Dispersion mit 1 % UMA

Die Durchführung entspricht Beispiel 1, mit folgenden Änderungen:

| | |
|---|---|
| UMA | 7,15 g |
| MMA | 21,45 g |
| nBA | 464,75 g |

### 4. Die Dispersion mit 3 % UMA

Die Durchführung entspricht Beispiel 1, mit folgenden Änderungen:

| | |
|---|---|
| UMA | 21,45 g |
| MMA | 64,35 g |
| nBA | 407,55 g |

### II. Herstellung der Schutzfolien und anwendungstechnische Prüfung

Die Dispersion wurde auf eine Polyethylenfolie (PE mit Corona vorbehandelt) mit 5 bis 6 g/m² aufgerakelt und bei 90°C drei Minuten getrocknet.

### Prüfung auf rückstandfreies Abziehen:

Dieser Test besteht in der Bewertung des Aussehens der zu schützenden Oberfläche nach dem Abziehen der Schutzfolie. Die mit der Folie beklebte Oberfläche wird eine bzw. vier Wochen bei 50°C und 80 % relativer Luftfeuchtigkeit gelagert. Dann werden die Folien von Hand einmal langsam und einmal rasch abgezogen und der Rückstand auf der Substratoberfläche per Augenschein beurteilt. Im optimalen Falle ist die Oberfläche frei von Rückständen des Klebstoffs.

Bewertet wird nach folgender Skala:
1. Substratoberfläche unverändert
2. Umriß der Schutzfolie auf Oberfläche erkennbar
3. Abdruck der Folie als Schatten erkennbar
4. etwas Klebstoffrückstand auf Oberfläche
5. Klebstoffschicht teilweise auf Oberfläche übertragen
6. Klebstoffschicht ganz auf Oberfläche übertragen

Das Abziehen wird nach folgender Skala beurteilt:
A. kaum Haftung
B. leicht abziehbar
C. schwer abziehbar

Geprüft wurde auf Stahl, Polycarbonat und Plexiglas

| Dispersion | Abzug | Plexiglas | | Polycarbonat | | Stahl | |
|---|---|---|---|---|---|---|---|
| | | 1 Woche | 4 Wochen | 1 Woche | 4 Wochen | 1 Woche | 4 Wochen |
| Dispersion ohne UMA | langsam | B6 | B6 | B6 | B6 | B6 | B6 |
| | rasch | B6 | B6 | B6 | B6 | B6 | B6 |
| Dispersion mit 1 % UMA | langsam | B1 | B1 | B4 | B4 | B4 | B4 |
| | rasch | B1 | B1 | B4 | B4 | B4 | B4 |
| Dispersion mit 2 % UMA | langsam | B1 | B1 | B4 | B4 | B1 | B4 |
| | rasch | B1 | B1 | B1 | B1 | B4 | B4 |
| Dispersion mit 3 % UMA | langsam | B1 | B1 | B1 | B1 | B2 | B2 |
| | rasch | B1 | B1 | B1 | B1 | B4 | B2 |
| Acronal® 50 D | langsam | C4 | C4 | C6 | C6 | C5 | C5 |
| | rasch | C1 | C4 | C6 | C6 | C6 | C6 |
| Acronal® 50 D mit 1,5 % Isocyanat (Basonal® FDS 3425) | langsam | B1 | B1 | C1 | B1 | C3 | B3 |
| | rasch | B1 | B1 | C1 | B1 | C3 | B3 |
| Acronal® 50 D ist ein handelsüblicher Klebrohstoff auf Dispersionsbasis, der von BASF für die Anwendung Schutzfolien verkauft wird. Acronal® 50 D wird mit Isocyanat-Vernetzer abgemischt, um ein rückstandsfreies Wiederablösen der Schutzfolie vom Substrat zu gewährleisten. | | | | | | | |

Quickstick, Schälfestigkeit und Kratztest auf PE-Folie:

Die Dispersionen wurden auf 25 mm breite Stücke PE-Folie mit 20 g/m² aufgerakelt und 3 Minuten bei 90°C getrocknet.

Die so erhaltenen Schutzfolien wurden auf eine Stahlplatte geklebt und Quickstick und Schälfestigkeit bei 23°C und 50 % relativer Luftfeuchtigkeit geprüft.

Die Schälfestigkeit wurde nach 24 h Lagerung in einer Zugprüfmaschine mit einer Abzugsgeschwindigkeit von 300 mm/min bestimmt.

Kratztest:
1. kein abkratzen möglich
2. schwierig abzukratzen
3. leicht abzukratzen

Die Haftung der Dispersion auf der Folie wird mittels des Kratztests geprüft: Je schwieriger der Film abzukratzen ist, desto besser ist die Haftung der Dispersion. Optimal ist die Note 1.

### Quickstick

Zur Bestimmung des Quickstick-Werts wurde aus einem 17,5 cm langen und 2,5 cm breiten Prüfstreifen durch Einspannen beider Enden in die Klemmbacken einer Zugmaschiene eine Schlaufe gebildet, die dann mit einer chromierten Stahloberfläche mit einer Geschwindigkiet von 30 cm/min (Herabsenken der Schlaufe auf das chromierte Stahlblech) in Kontakt gebracht wird. Nach vollflächigem Kontakt wird die Schlaufe sofort wieder abgezogen und die dabei ermittelte Maximalkraft in N/2,5 cm als Maß für den Quickstick-Wert (Schlingenwert, Tack) bestimmt.

### Ergebnisse

| Dispersion | Qickstick N/25 mm | Schälfestigkeit in N/25 mm nach 24 h Lagerung | Kratztest |
|---|---|---|---|
| Dispersion ohne UMA | 5,6 | 6,4 | 2 |
| Dispersion mit 1 % UMA | 2,6 | 2,6 | 1 |
| Dispersion mit 2 % UMA | 2,9 | 3,5 | 1 |
| Dispersion mit 3 % UMA | 3,7 | 4,5 | 1 |
| Acronal® 50 D | 6,5 | 7,2 | 3 |
| Acronal® 50 D mit 1,5 % Isocyanat (Basonal® FDS 3425) | 3,7 | 2,5 | 1 |

## Patentansprüche

1. Verwendung eines Klebstoffs, der ein radikalisch polymerisiertes Copolymerisat enthält, welches 0,1 bis 10 Gew.-%, bezogen auf das Copolymerisat, aus einer Verbindung A mit mindestens einer copolymerisierbaren, ethylenisch ungesättigten Gruppe und einer Gruppe der Formel I 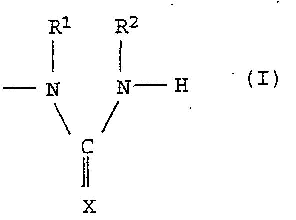 besteht, worin R¹ und R² unabhängig voneinander für ein Wasserstoff oder eine C₁-C₅ Alkylgruppe oder R¹ und R² zusammen für eine überbrückende C₂-C₄ Alkylengruppe, die bis zu zweifach mit einer C₁-C₄ Alkoxygruppe oder Hydroxylgruppe substituiert sein kann, stehen und X für O oder S steht, mindestens 80 Gew.-% sogenannter Hauptmonomere, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C Atomen und ein oder zwei Doppelbindungen oder Mischungen dieser Monomeren aufgebaut ist,
und neben diesen Hauptmonomeren gegebenenfalls weiteren Monomeren ausgewählt aus Monomeren mit Carbonsäure-, Sulfonsäure- oder Phosphorsäuregruppen, C1-C10 Hydroxyalkyl(meth)acrylat, (Meth)acrylamid, Phenyloxyethylglykolmono(meth)acrylat, Glycidylacrylat, Glycidylmethacrylat, Amino(meth)acrylat und Monomeren mit einer Benzophenongruppe zur Herstellung von mit dem Klebstoff beschichteten, rückstandsfrei wiederabziehbaren Schutzfolien und Etiketten.

2. Verwendung gemäß Anspruch 1, **dadurch gekennzeichnet, daß** es sich bei der ethylenisch ungesättigten Gruppe in Verbindung A um eine Acryl- oder Methacrylgruppe handelt.

3. Verwendung gemäß Anspruch 1, **dadurch gekennzeichnet, daß** es sich bei der Verbindung A um eine Verbindung der Formel II 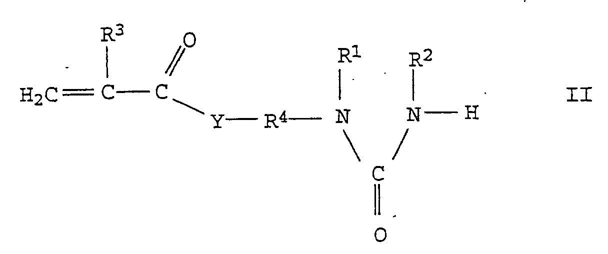 handelt, worin R³ für ein H-Atom oder eine Methylgruppe, Y für -O- oder -NH-, R⁴ für eine C₁ -C₁₀ Alkylengruppe stehen.

4. Verwendung gemäß einem der Ansprüche 1 bis 3, **dadurch gekennzeichnet, daß** es sich bei dem Copolymerisat um ein Emulsionscopolymerisat handelt.

5. Verwendung gemäß einem der Ansprüche 1 bis 3, **dadurch gekennzeichnet, daß** es sich bei dem Klebstoff um einen Schmelzhaftklebstoff handelt und das Copolymerisat durch Lösungspolymerisation in einem organischen Lösungsmittel hergestellt wird.

6. Verwendung gemäß einem der Ansprüche 1 bis 5, **dadurch gekennzeichnet, daß** das Copolymerisat eine Schälfestigkeit von 1 bis 5 Newton hat, bei einer Auftragsmenge von 20 g Copolymerisat auf 1 m² Polyethylenfolie, Verkleben eines 25 mm breiten Streifens der beschichteten Polyethylenfolie mit Stahl mit einem Anpreßdruck von 2,5 kg und Abziehen des Streifens bei 21°C.

7. Verwendung zur Herstellung von Schutzfolien gemäß einem der Ansprüche 1 bis 6, **dadurch gekennzeichnet, daß** es sich um eine mit Klebstoff beschichtete thermoplastische Folie, insbesondere eine Polyethylenfolie, handelt.

8. Verwendung zur Herstellung von Etiketten gemäß einem der Ansprüche 1 bis 6, **dadurch gekennzeichnet, daß** es sich um Folienetiketten handelt.

## Claims

1. The use of an adhesive comprising a free-radically polymerized copolymer composed of from 0.1 to 10% by weight, based on the copolymer, of a compound A containing at least one copolymerizable, ethylenically unsaturated group and a group of the formula I 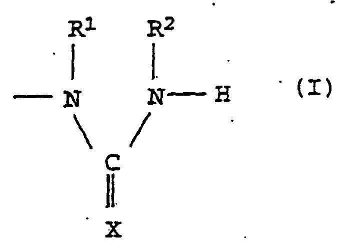 in which R¹ and R² independently of one another are a hydrogen or a C₁-C₅ alkyl group or R¹ and R² together are a bridging C₂-C₄ alkylene group, which can be substituted up to twice by a C₁-C₄ alkoxy group or hydroxyl group, and X is O or S, at least 80% by weight of what are termed principal monomers, selected from C₁ to C₂₀ alkyl (meth)-acrylates, vinyl esters of carboxylic acids containing up to 20 carbon atoms, vinylaromatics having up to 20 carbon atoms, ethylenically unsaturated nitriles, vinyl halides, vinyl ethers of alcohols containing 1 to 10 carbon atoms, aliphatic hydrocarbons having 2 to 8 carbon atoms and one or two double bonds, or mixtures of these monomers, and, in addition to these principal monomers, if appropriate, further monomers selected from monomers containing carboxylic, sulfonic or phosphoric acid groups, C1-C10 hydroxylalkyl (meth)acrylate, (meth)acrylamide, phenoxyethyl glycol mono(meth)acrylate, glycidyl acrylate, glycidyl methacrylate, amino (meth)acrylate and monomers containing a benzophenone group, for producing residue redetachable protective films and labels, which are coated with the adhesive.

2. The use according to claim 1, wherein the ethylenically unsaturated group in compound A is an acrylic or methacrylic group.

3. The use according to claim 1, wherein the compound A is a compound of the formula II 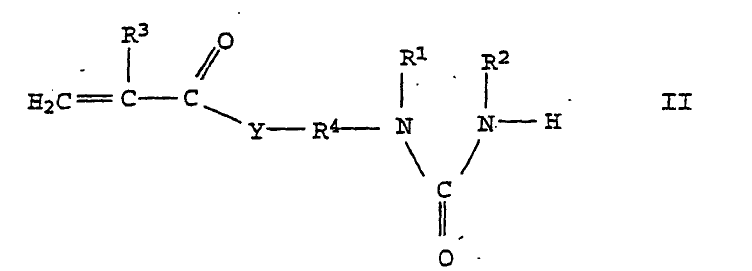 in which R³ is a hydrogen atom or a methyl group, Y is -O- or -NH-, and R⁴ is a C₁-C₁₀ alkylene group.

4. The use according to any one of claims 1 to 3, wherein the copolymer is an emulsion copolymer.

5. The use according to any one of claims 1 to 3, wherein the adhesive is a pressure-sensitive hotmelt adhesive and the copolymer is prepared by solution polymerization in an organic solvent.

6. The use according to any one of claims 1 to 5, wherein the copolymer has a peel strength of from 1 to 5 newtons for an application rate of 20 g of copolymer per 1 m² of polyethylene film, bonding of a 25-mm-wide strip of the coated polyethylene film to steel with an applied pressure of 2.5 kg, and detachment of the strip at 21°C.

7. The use for producing protective films according to any one of claims 1 to 6, wherein the film is an adhesive-coated thermoplastic film, in particular a polyethylene film.

8. The use for producing labels according to any one of claims 1 to 6, wherein the labels are film labels.

## Revendications

1. Utilisation d'un adhésif, qui contient un copolymère polymérisé par voie radicalaire, lequel se compose de 0,1% à 10% en poids, par rapport au copolymère, d'un composé A contenant au moins un groupe à insaturation éthylénique copolymérisable et un groupe de formule I 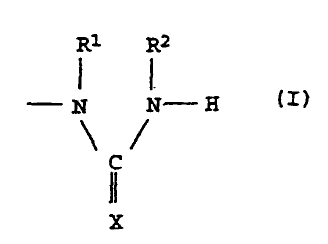 dans laquelle R¹ et R² représentent, indépendamment l'un de l'autre, un atome d'hydrogène ou un groupe alkyle en C₁ à C₅ ou bien R¹ et R2 représentent conjointement un groupe pontant alkylène en C₂ à C₄, qui peut être substitué jusqu'à deux fois par un groupe alcoxy en C₁ à C₄ ou par un groupe hydroxyle, et X représente O ou S, d'au moins 80% en poids de dénommés monomères principaux, choisis parmi les (méth)acrylates d'alkyle en C₁ à C₂₀, les esters vinyliques d'acides carboxyliques contenant jusqu'à 20 atomes de C, les composés vinylaromatiques contenant jusqu'à 20 atomes de C, les nitriles à insaturation éthylénique, les halogénures de vinyle, les éthers vinyliques d'alcools contenant 1 à 10 atomes de C, les hydrocarbures aliphatiques contenant 2 à 8 atomes de C et une ou deux doubles liaisons, ou des mélanges de ces monomères, et, en plus de ces monomères principaux, éventuellement d'autres monomères choisis parmi les monomères contenant des groupes acide carboxylique, acide sulfonique ou acide phosphorique, le (méth)acrylate d'hydroxyalkyle en C₁ à C₁₀, le (méth)acrylamide, le mono(méth)acrylate de phényloxyéthylglycol, l'acrylate de glycidyle, le méthacrylate de glycidyle, l'amino(méth)acrylate et les monomères contenant un groupe benzophénone, pour la production de pellicules protectrices et d'étiquettes repelables sans résidu, revêtues avec cet adhésif.

2. Utilisation selon la revendication 1, **caractérisée en ce que** le groupe à insaturation éthylénique dans le composé A est un groupe acrylique ou méthacrylique.

3. Utilisation selon la revendication 1, **caractérisée en ce que** le composé A est un composé de formule II 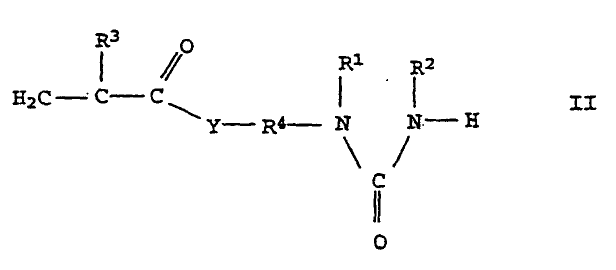 dans laquelle R³ représente un atome d'hydrogène ou un groupe méthyle, Y représente -O- ou -NH-, R⁴ représente un groupe alkylène en C₁ à C₁₀.

4. Utilisation selon l'une quelconque des revendications 1 à 3, **caractérisée en ce que** le copolymère est un copolymère en émulsion.

5. Utilisation selon l'une quelconque des revendications 1 à 3, **caractérisée en ce que** l'adhésif est un adhésif thermofusible et que le copolymère est produit au moyen d'une polymérisation en solution dans un solvant organique.

6. Utilisation selon l'une quelconque des revendications 1 à 5, **caractérisée en ce que** le copolymère possède une résistance au pelage de 1 Newton à 5 Newton, pour une quantité déposée de 20 g de copolymère sur un film de polyéthylène de 1 m², un collage d'une bande du film de polyéthylène revêtu d'une largeur de 25 mm sur de l'acier avec une pression d'application de 2,5 kg et un pelage de la bande à 21°C.

7. Utilisation pour la production de pellicules protectrices selon l'une quelconque des revendications 1 à 6, **caractérisée en ce qu'**il s'agit d'un film thermoplastique, en particulier d'un film de polyéthylène, revêtu avec l'adhésif.

8. Utilisation pour la production d'étiquettes selon l'une quelconque des revendications 1 à 6, **caractérisée en ce qu'**il s'agit d'étiquettes constituées de film plastique.
